# EUROPÄISCHE PATENTSCHRIFT

(11) **EP 2 326 556 B1**
(45) Veröffentlichungstag und Bekanntmachung des Hinweises auf die Patenterteilung: **23.09.2015**
(21) Anmeldenummer: 09783342.0
(22) Anmeldetag: 23.09.2009
(51) Int. Cl.: B64D 35/00, F02C 7/275, F02C 7/32

(54) **LEISTUNGSVERTEILUNGSSYSTEM**
POWER DISTRIBUTION SYSTEM
SYSTÈME DE DISTRIBUTION DE PUISSANCE

(30) Priorität: 26.09.2008 DE 102008048915; 26.09.2008 US 194447 P
(43) Veröffentlichungstag der Anmeldung: 01.06.2011
(73) Patentinhaber: Airbus Operations GmbH, 21129 Hamburg (DE)
(72) Erfinder: STOLTE, Ralf-Henning, 22525 Hamburg (OT Bahrenfeld) (DE)
(74) Vertreter: Maiwald Patentanwalts GmbH
(86) Internationale Anmeldenummer: PCT/EP2009/062338
(87) Internationale Veröffentlichungsnummer: WO 2010/034750

(56) Entgegenhaltungen:
- EP-A2- 2 033 893
- GB-A- 1 092 745
- US-A- 5 054 716
- US-A- 5 143 329

## Beschreibung

Die Erfindung betrifft ein Flugzeug mit einem Leistungsverteilungssystem sowie ein Verfahren zum Verteilen von Leistung in einem Flugzeug.

Ein Bestreben bei der Entwicklung moderner Verkehrsflugzeuge ist, Leistung innerhalb des Flugzeugs elektrisch zu übertragen, um verlustbehaftete und wenig flexible mechanische, hydraulische oder andere Übertragungsmechanismen zu vermeiden. Durch stetige Zunahme elektrischer und elektronischer Einrichtungen in Passagierkabinen sowie die Entwicklung zapfluftarmer oder gänzlich auf Zapfluft verzichtender Klimatisierungssysteme mit elektrischen Kompressor- und Gebläsemotoren führt dazu, dass in Flugzeugtriebwerken elektrische Generatoren mit sehr hohen elektrischen Leistungen integriert werden müssen.

Die Dimensionierung und die Anzahl der installierten Generatoren im Flugzeug ist abhängig von einer Reihe von Faktoren. Zum Sichern einer ausreichenden Zuverlässigkeit eines Verkehrsflugzeugs existiert ein umfangreiches Regelwerk, welches Ausfallwahrscheinlichkeiten, mittlere zeitliche Abstände zwischen Fehlern ("Mean Time Between Failure", MTBF) oder ähnliche Parameter für Flugzeugsysteme mit beliebiger Kritikalität vorsieht. So sind bei der Dimensionierung von elektrischen Generatoren eines zweistrahligen Verkehrsflugzeugs auch die von der ICAO erlassenen "Extended-Range Twin-Engine Operation Performance Standards" (abgekürzt: ETOPS) zu beachten, mit Hilfe derer zweistrahlige Verkehrsflugzeuge konstruiert werden können, so dass sie für längere Strecken mit nur einem funktionstüchtigen Triebwerk eingesetzt werden dürfen, wenn der nächstgelegene Flughafen mehr als 60 Minuten entfernt ist. Es finden sich in neueren zweistrahligen Verkehrsflugzeugen unter anderem resultierend daraus insgesamt vier - in jedem der Triebwerke jeweils zwei - Generatoren, die jeweils in der Lage sind, die vollständige elektrische Leistung aufzubringen. Aufgrund der benötigten Leistung von mehreren 100 kW sind die Generatoren entsprechend sehr groß, schwer und teuer. Die elektrische Versorgung kann jedoch hinsichtlich möglicher Fehlerfälle durch Mehrfachredundanzen und umfassende Regelungsmechanismen als nahezu ausfallsicher betrachtet werden.

Die von den Generatoren bereitgestellte elektrische Leistung wird mit Hilfe aufwändiger Leistungselektronik in Form von Gleichstrom und/oder Wechselstrom mit konstanter Frequenz bereitgestellt, die wiederum große Mengen an abzuführender Abwärme produziert. Dieser Aufwand für die einhergehende Effizienzerhöhung kann zwar bei größeren Langstreckenflugzeugen begründet sein, jedoch würde er bei kleineren Flugzeugen mit vornehmlicher Nutzung auf Kurzstrecken den wirtschaftlichen Interessen nicht gerecht werden können.

US 5 054 716 offenbart ein Antriebssystem für ein Schwenkrotorflugzeug, das ein Drehmomentübertragungsmittel in Form einer Welle aufweist, eine Vielzahl von Kopplungsbauteilen, eine rotierbare Einrichtung eines Klimatisierungssystems in Form eines Kompressors, die mit der Welle verbunden ist.

GB 1 092 745 A zeigt Triebwerksinstallationen für ein Flugzeug, bei dem Drehmomentübertragungsmittel vorgesehen sind, die über Kupplungen Drehmoment von Triebwerken zu anderen Verbrauchern übertragen.

US 5 143 329 zeigt ein Klimatisierungssystem eines Flugzeugs, welches über eine Gasturbine betrieben wird und einen Grenzschichtkompressor, der mit einer Turbinenwelle verbunden ist.

EP 2 033 893 A2 zeigt ein Flugzeugtriebwerkssystem mit einer Getriebeeinheit, wobei ein erstes Triebwerk und ein zweites Triebwerk auf einer Struktur angeordnet sind und eine Getriebeeinheit mit dem ersten Triebwerk und dem zweiten Triebwerk verbunden ist, um weitere Verbraucher mit Leistung zu versorgen.

Es ist eine Aufgabe der Erfindung, Flugzeug mit einem Lesitungsverteilungssystem und zwei Triebwerken vorzuschlagen, das als primäres Übertragungsmedium nicht Elektrizität nutzt. Eine weitere Aufgabe der Erfindung ist, ein derartiges Flugzeug vorzuschlagen, das zum weitestgehend von Zapfluft unabhängigen Betreiben eines Klimatisierungssystems geeignet ist.

Die Aufgabe wird gelöst durch ein Leistungsverteilungssystem gemäß den Merkmalen des unabhängigen Anspruchs 1.

Ein wichtiger Aspekt des erfindungsgemäßen Leistungsverteilungssystems ist darin zu sehen, dass Drehmomentübertragungsmittel von einer Welle mindestens zweier Triebwerke eine rotierende Bewegung in einen Bereich des Flugzeuginneren überträgt, wo diese rotierende Bewegung zum Antreiben von Einrichtungen unterschiedlicher Art genutzt werden kann. Handelt es sich bei dem Flugzeug um ein zweistrahliges Flugzeug, bei dem die Triebwerke direkt an einem hinteren Rumpfbereich angeordnet sind, sind die mit den Drehmomentübertragungsmitteln zu überbrückenden Distanzen zum Flugzeuginneren relativ gering. Gleichermaßen könnte es jedoch auch möglich sein, direkt zwischen zwei mit jeweils einem Triebwerk ausgerüsteten Flügeln einen Bereich vorzusehen, in dem die Einrichtungen angeordnet sind und von den Drehmomentübertragungsmitteln angetrieben werden.

So wäre es etwa möglich, direkt aus der Rotation der Drehmomentübertragungsmittel rotierbare Einrichtungen eines Klimatisierungssystems des Flugzeugs zu betreiben. Beispielsweise könnten die

Drehmomentübertragungsmittel bei Entnahme von Zapfluft aus den Triebwerken eine Luftkreislaufmaschine (bzw. eine sogenannte "air cycle machine") antreiben, mittels der eine Kühlung von Luft erfolgen kann. Dafür könnte ein Anschluss mit einem niedrigeren Zapfluftdruck an den Triebwerken zur Zapfluftentnahme gewählt werden, da die Luftkreislaufmaschine durch ihre mechanische Anbindung zusätzlich Druck erzeugen kann. Dies führt zu einer verbesserten Effizienz des Triebwerks. Die von den Triebwerken übertragene mechanische Leistung wäre besonders ab dem beginnenden Abstieg hilfreich, da dort die Triebwerke im Leerlauf betrieben werden. Weiterhin könnten auch ein oder mehrere Kompressoren zum Beaufschlagen der Kabine mit Druck für den Ersatz der Zapfluft angetrieben werden, die Luft aus einer Luftquelle in die Kabine und/oder in eine Mischkammer einleiten.

Als mögliche Drehmomentübertragungsmittel kommen sämtliche Maschinenelemente in Betracht, die ein Übertragen eines Drehmoments ermöglichen. Als eines der einfachsten Beispiele sei eine herkömmliche Welle genannt, die durch Gelenke erweitert werden kann, um komplexere Wege zurücklegen und Wärmeausdehnungen sowie Schwingungsbewegungen ausgleichen zu können. Weiterhin wäre es möglich, Riemen- oder Kettenantriebe als Drehmomentübertragungsmittel zu verwenden. Zum Ausgleichen von Geschwindigkeitsunterschieden zwischen der Rotation der Welle im Triebwerk und der anzutreibenden Einrichtung können weiterhin Getriebe eingesetzt werden, die in einem speziellen Ausführungsbeispiel auch dazu eingerichtet sind, eine von der Eingangsdrehzahl unabhängige Ausgangsdrehzahl bereitzustellen. Das Drehmomentübertragungsmittel und das optionale Getriebe müssen innerhalb des Flugzeugs gelagert sein, so dass eine zuverlässige Übertragung des Drehmoments gewährleistet werden kann und gleichzeitig die Integrität des Drehmomentübertragungsmittels unter sämtlichen Betriebsbedingungen gewährleistet werden kann.

Damit das Leistungsverteilungssystem möglichst flexibel ist und die entsprechenden Einrichtungen lediglich bedarfsweise angetrieben werden, werden die Einrichtungen von einer Verteilungswelle angetrieben, die mit einer ersten Kupplung an eine Schnittstelle des Drehmomentübertragungsmittels gekoppelt werden kann. Zusätzlich dazu könnte es in einigen Anwendungsfällen sinnvoll sein, an bestimmten anzutreibenden Einrichtungen jeweils eine zusätzliche Kupplung anzubringen, die ein bedarfsweises Entkoppeln der jeweiligen Einrichtung ermöglicht. Alternativ dazu könnte bei Betrachtung verschiedener Betriebsfälle des Flugzeugs sinnvoll sein, sämtliche Einrichtungen unabhängig voneinander mit dem Drehmomentübertragungsmittel verbinden zu können, wozu jedoch ein Verteilergetriebe oder mehrere Schnittstellen an dem Drehmomentübertragungsgetriebe notwendig ist.

Als Schnittstelle eines Drehmomentübertragungsmittels ist etwa ein Ende einer betreffenden Welle anzusehen, an dem eine Welle-Nabe-Verbindung angebracht ist oder angebracht werden kann. Dies könnte eine Kerbverzahnung, eine Passfeder-Nut-Kombination, ein Flansch oder dergleichen sein.

Ein Unterbrechen der Rotation der an das Drehmomentübertragungsmittel angeschlossenen Einrichtungen kann durch Lösen der entsprechenden ersten Kupplung auf Wunsch unterbunden werden, so dass beispielsweise während eines Triebwerksstarts mechanische Lasten des startenden Triebwerks verringert werden können.

Eine bevorzugte Weiterbildung des erfindungsgemäßen Leistungsverteilungssystems sieht die Integration von mindestens einer Motor-Generator-Einheit vor, die mit dem Drehmomentübertragungsmittel gekoppelt werden kann. Diese Motor-Generator-Einheit kann bevorzugt als Motor oder als Generator mit variabler oder konstanter Frequenz oder als Gleichstromgenerator betrieben werden, so dass beim Generatorbetrieb aus der Rotation des Drehmomentübertragungsmittels elektrische Energie erzeugt oder beim Motorbetrieb das zugeordnete Triebwerk gestartet werden kann. Beim Aufenthalt des Flugzeugs am Boden kann dadurch die Ventilation der Kabine, die Kühlung durch eine Luftkreislaufmaschine oder einen Verdampferkühlkreislauf realisiert werden. Wenn das zugeordnete Triebwerk läuft, kann die im Generatorbetrieb gewonnene elektrische Energie zum Versorgen von elektrischen oder elektronischen Verbrauchern genutzt werden, deren Leistungsversorgung mechanisch nicht oder nur erschwert möglich ist, wie dies etwa bei reinen elektronischen Recheneinheiten mit herkömmlichen elektronischen Halbleiterbauelementen der Fall ist.

Bei Verwendung von mehreren Drehmomentübertragungsmitteln für mehrere Triebwerke kann beispielsweise zwischen einem linken Strang und einem rechten Strang, der jeweils einem linken oder einem rechten Triebwerk zugeordnet ist und aus jeweils einem Drehmomentübertragungsmittel, rotierbaren Einrichtungen und etwaigen Kupplungen besteht, Drehmoment übertragen werden. Dies ist dann besonders sinnvoll, wenn ein Triebwerk ausgefallen sein sollte und nicht sämtliche anzutreibenden Einrichtungen von dem verbleibenden Strang des intakten Triebwerks angetrieben werden können. Der Strang am ausgefallenen Triebwerk könnte etwa durch Lösen der zugehörigen ersten Kupplung von dem Triebwerk entkoppelt werden und Drehmoment von dem benachbarten Strang aufnehmen. Hierfür wäre es sinnvoll, eine zweite Kupplung zwischen den beiden Strängen anzuordnen, mit deren Hilfe ein Übertragen von Drehmoment aus einem Strang in den anderen Strang ermöglicht wird. Dies bedeutet, dass das Leistungsverteilungssystem in Fehlerfällen zur Berücksichtigung von Teilausfällen des Systems rekonfiguriert werden kann.

Ein Leistungsverteilungssystem könnte alternativ auch ohne Betrieb der Triebwerke erfolgen, wenn sich das Flugzeug beispielsweise am Boden aufhält und der Betrieb der Triebwerke im Leerlauf wirtschaftlich ungünstig wäre. Dafür könnten ein oder mehrere Motor-Generator-Einheiten von den Triebwerken durch Lösen der ersten Kupplungen entkoppelt über eine interne oder externe Stromquelle versorgt in Drehung versetzt werden. Dadurch ist eine mechanische Leistungsversorgung von Kompressoren, Luftkreislaufmaschinen oder auch Verdampferkühlmaschinen eines Klimatisierungssystems und die elektrische Versorgung von elektrischen Verbrauchern möglich. Bei kleineren Verkehrsflugzeugen käme zum Bereitstellen ausreichend elektrischer Leistung ein Verbrennungsmotor in Betracht, jedoch wären - ohne Anspruch auf Vollständigkeit der Aufzählung - auch eine Brennstoffzelle, eine Anordnung aus mehreren Brennstoffzellen, ein oder mehrere Akkumulatoren, eine externe Stromversorgung oder dergleichen denkbar und vorteilhaft.

Weitere vorteilhafte Weiterbildungen des erfindungsgemäßen Flugzeugs mit einem Leistungsverteilungssystem sind den Unteransprüchen zu entnehmen. Weiterhin wird die Aufgabe durch ein Verfahren zum Verteilen von Leistung in einem Flugzeug gelöst.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte. Es zeigen:
- Fig. 1:: eine schematische Ansicht eines ersten Ausführungsbeispiels des erfindungsgemäßen Leistungsverteilungssystems;
- Fig. 2:: eine schematische Ansicht eines weiteren Ausführungsbeispiels des erfindungsgemäßen Leistungsverteilungssystems;
- Fig. 3:: ein Verfahren zum Verteilen von Leistung in einem Flugzeug; und
- Fig. 4:: ein Flugzeug mit mindestens einem erfindungsgemäßen Leistungsverteilungssystem.

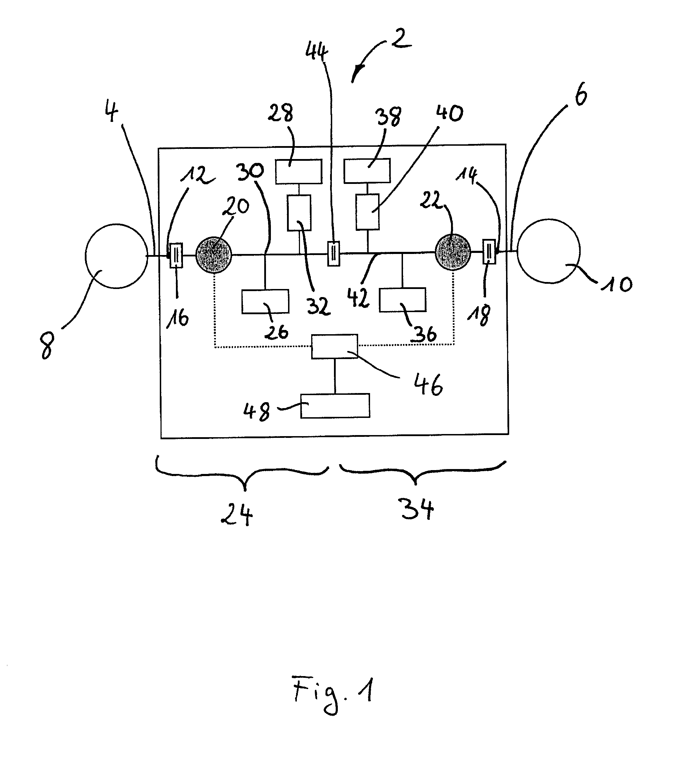

Fig. 1 zeigt ein erfindungsgemäßes Leistungsverteilungssystem 2, das bevorzugt im Inneren eines Flugzeugrumpfs installiert ist. Im Wesentlichen besteht das Leistungsverteilungssystem 2 aus zwei Drehmomentübertragungsmitteln 4 und 6, die von einem linken Triebwerk 8 und einem rechten Triebwerk 10 Drehmoment in den Flugzeugrumpf übertragen. An ihren Enden weisen die Drehmomentübertragungsmittel 4 und 6 jeweils eine Art Schnittstelle 12 und 14 auf, an der das in den Flugzeugrumpf übertragene Drehmoment abgegriffen werden kann.

In dem gezeigten Beispiel schließen sich zwei erste und im Normalfall bevorzugt geschlossene Kupplungen 16 und 18 an die Schnittstellen 12 und 14 an und können wahlweise Drehmoment zwischen dem linken Triebwerk 8 und einer linken Motor-Generator-Einheit 20 oder zwischen dem rechten Triebwerk 10 und einer rechten Motor-Generator-Einheit 22 austauschen. Die Motor-Generator-Einheiten sind direkt mit den Drehmomentübertragungsmitteln 4 und 6 verbunden. Im Anschluss folgen in dem linken Strang 24 mehrere mechanische Verbraucher 26 und 28, die ein im linken Strang bereitgestelltes Drehmoment nutzen können. Der Verbraucher 28 wird beispielhaft nicht direkt von einer der Motor-Generator-Einheit 20 nachfolgenden Verteilungswelle 30 betrieben, sondern über ein zwischengeschaltetes Getriebe 32. Im rechten Strang 34, in dem das Drehmoment des Triebwerks 10 übertragen wird, sind ebenfalls mehrere Verbraucher 36 und 38 angeordnet, wobei auch der oder die Verbraucher 38 durch ein zwischengeschaltetes Getriebe 40 von einer Verteilungswelle 42, die nach der Motor-Generator-Einheit 22 folgt, angetrieben wird.

In dem gezeigten Ausführungsbeispiel in Fig. 1 ist der linke Strang 24 mit dem rechten Strang 34 über eine zweite Kupplung 44 gekoppelt, so dass bei eventuellem Ausfall eines Triebwerks 8 oder 10 Drehmoment an die Verbraucher 26, 28 oder 36 und 38 geleitet werden kann, wenn der entsprechende Strang nicht von dem dazugehörigen Triebwerk 8 oder 10 angetrieben wird.

Ferner weist das erfindungsgemäße Leistungsverteilungssystem 2 eine Elektronikeinheit 46 auf, die mit den Motor-Generator-Einheiten 20 und 22 elektrisch verbunden ist. Gleichermaßen ist eine Hilfsenergiequelle 48 an die Elektronikeinheit 46 angekoppelt und dient dazu, die Motor-Generator-Einheiten 20 und 22 mit einer aufbereiteten Wechsel- oder Gleichspannung zu versorgen und im Motorbetrieb anzutreiben bzw. anzusteuern. Dies könnte dann von Vorteil sein, wenn die Triebwerke 8 und 10 beispielsweise beim Bodenaufenthalt des Flugzeugs nicht betrieben werden und dennoch die Verbraucher 26 und 28 bzw. 36 und 38 betrieben werden müssen. Dazu sind die ersten Kupplungen 16 und 18 zu den Triebwerken 8 und 10 zu lösen, so dass durch die Motor-Generator-Einheiten 20 und 22 die Triebwerke 8 und 10 nicht unnötigerweise in Drehung versetzt werden. Im Flugfall könnte diese Energiequelle 48 eine zusätzliche Redundanz hinsichtlich möglicher Fehler der ersten Kupplungen 16 und 18 darstellen.

Die Motor-Generator-Einheiten erzeugen bei laufenden Triebwerken 8 und 10 elektrische Leistung, die über die Elektronikeinheit 46 an ein bestehendes Stromversorgungsnetz oder ein alternatives Versorgungsnetz abgeben wird, so dass zusätzlich elektrische und elektronische Verbraucher betrieben werden können. Eine Integration von Generatoren in die Triebwerke 8 und 10 könnte sich dadurch erübrigen.

Als geeignete Verbraucher für das erfindungsgemäße Leistungsverteilungssystem kommen eine Reihe von Einrichtungen und Vorrichtungen in Frage. Beispielsweise könnten bei weitestgehendem Verzicht auf die Entnahme von Zapfluft Kabinenluftkompressoren zum Versorgen der Kabine mit Frischluft und zum Beaufschlagen der Kabine mit Druck eingesetzt werden. Für jeden Strang 24 und 34 ist es aus Redundanzgründen zudem sinnvoll, zwei Kabinenluftkompressoren einzusetzen. Alternativ dazu wäre bei entsprechender Zuverlässigkeit der einsetzbaren Kabinenluftkompressoren auch der Betrieb lediglich eines derartigen Kompressors pro Strang 24 und 34 möglich. Zur Kühlung könnte dann entweder eine Verdampferkühlmaschine mit dem Kältemittel 134a oder CO₂ eingesetzt werden, die ebenfalls durch das in dem jeweiligen Strang 24 oder 34 vorliegende Drehmoment angetrieben werden kann. Alternativ dazu bietet sich auch die Verwendung einer Luftkreislaufkühlmaschine an, die die Druckbeaufschlagung der Kabine unterstützt oder gänzlich übernehmen könnte sowie für entsprechende Kühlung sorgt. Ist eine Zapfluftentnahme aus den Triebwerken 8 und 10 angestrebt, sind Luftkreislaufkühlmaschinen zur Kühlung von Luft und zur Druckbeaufschlagung der Kabine besonders geeignet.

In der gezeigten Darstellung werden die Kabinenluftkompressoren oder auch die Luftkreislaufkühlmaschinen aufgrund des hohen Drehzahlniveaus der Drehmomentübertragungsmittel 4 und 6 über die Getriebe 32 und 40 angetrieben. Es wäre prinzipiell realisierbar, etwaig verwendete Kabinenluftkompressoren direkt von den Drehmomentübertragungsmitteln 4 und 6 aus anzutreiben und mit einer variablen Geometrie auszustatten. Dies hängt jedoch von dem herzustellenden Druckverhältnis zwischen Eingangsdruck und Ausgangsdruck ab der Kabinenluftkompressoren ab, so dass bei ungünstigen Druckverhältnissen möglicherweise die Verwendung einer variablen Geometrie nicht ausreicht. Eine variable Geometrie von Kabinenluftkompressoren könnte allerdings dennoch als zusätzliche Option zu einem Betrieb über die Getriebe 32 und 40 vorgesehen werden.

Gleichermaßen könnten zusätzliche Belüftungsgebläse, hydraulische Pumpen, Kühlventilatoren und dergleichen direkt durch die Wellen 30 und 42 mit der vollen Drehzahl betrieben werden. Wird in dem betreffenden Flugzeug den Triebwerken 8 und 10 Zapfluft entnommen, ist es denkbar, diese mit Hilfe von Luftkreislaufmaschinen, die an einem oder mehreren der Getriebe 32 und 40 betrieben werden, einzusetzen.

Bei einer Versorgung des rechten Strangs 34 durch das Triebwerk 8 wird die zweite Kupplung 44 geschlossen und die rechte erste Kupplung 18 geöffnet. Bei einem Betrieb des linken Strangs 24 durch das Triebwerk 10 wird gleichermaßen mittlere Kupplung 44 geschlossen und die linke erste Kupplung 16 geöffnet.

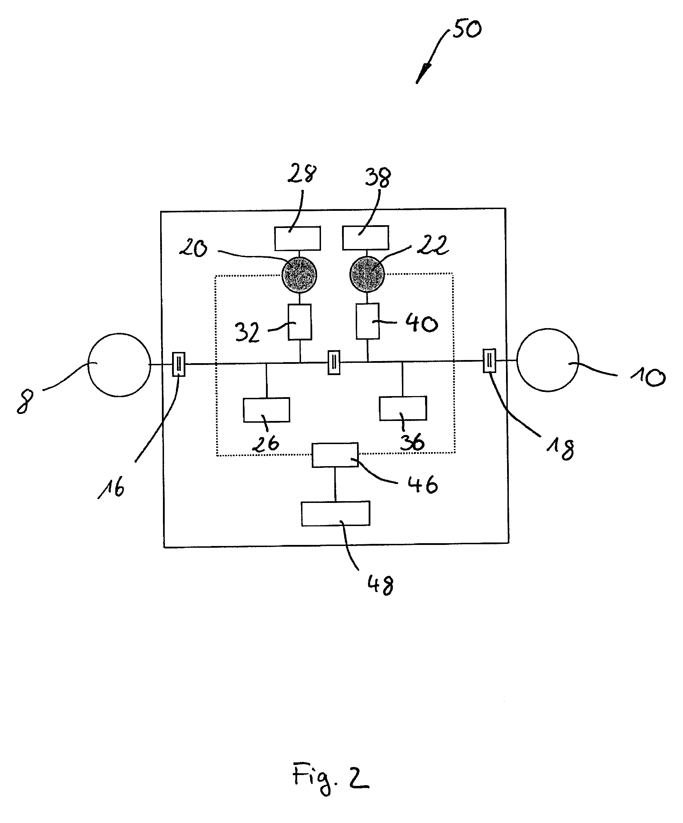

In Fig. 2 wird eine Abwandlung in Form eines Leistungsverteilungssystems 50 dargestellt, bei dem die Position der Motor-Generator-Einheiten 20 und 22 geändert worden ist. Diese befinden sich nun zwischen den Getrieben 32 und 40 und den dazugehörigen Verbrauchern 28 und 38. Dies bedeutet, dass die Motor-Generator-Einheiten 20 und 22 ebenfalls mit einer angepassten reduzierten Drehzahl betrieben werden, die abweicht von den notwendigen Drehzahlen der Verbraucher 26 und 36. Die restlichen Merkmale des Leistungsverteilungssystems 50 entsprechen der Darstellung aus Fig. 1, so dass auch den Motor-Generator-Einheiten 20 und 22 elektrische Leistung von einer durch eine Hilfsenergiequelle versorgten Elektronikeinheit 46 beziehen können.

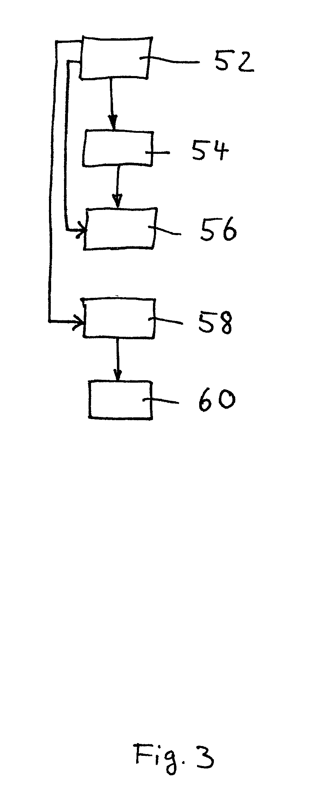

In Fig. 3 wird schematisch ein erfindungsgemäßes Verfahren zum Verteilen von Leistung vorgestellt. Das erfindungsgemäße Verfahren umfasst im Wesentlichen das Übertragen 52 von Drehmoment zwischen einem Triebwerk und mindestens einer rotierbaren Einrichtung im Innern des Flugzeugs mittels eines Drehmomentübertragungsmittels. Im speziellen umfasst das erfindungsgemäße Verfahren das Betreiben 54 mindestens einer rotierbaren Einrichtung eines Klimatisierungssystems in Form eines Kabinenluftkompressors, einer Luftkreislaufmaschine und/oder einer Verdampferkühlmaschine und das Übertragen 56 von Drehmoment zwischen dem Triebwerk und mindestens einer Motor-Generator-Einheit, das auch unabhängig vom Betreiben der rotierbaren Einrichtung des Klimatisierungssystems durchgeführt werden kann. Weiterhin kann ein von einem einzelnen Triebwerk versorgter Strang getrennt 58 werden und eine zweite Kupplung zum Übertragen von Drehmoment eines anderen Strangs geschaltet 60 werden, wie vorangehend bereits beschrieben. Sämtliche Verfahrensschritte sind in beliebiger Kombination miteinander vertauschbar sowie reversibel.

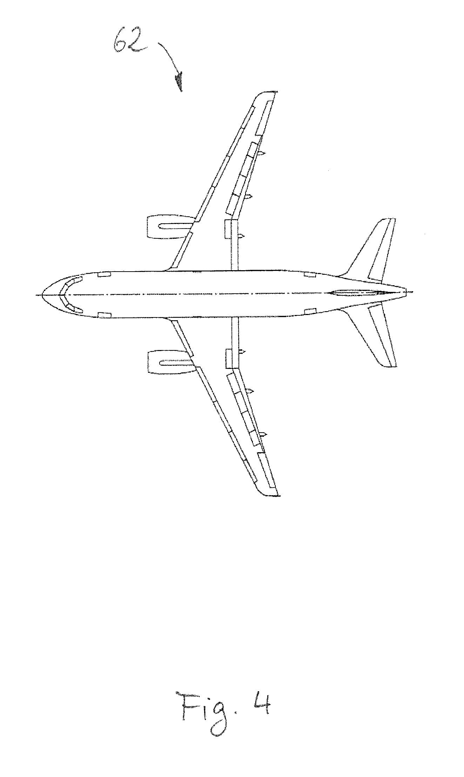

Schließlich wird in Fig. 4 ein Flugzeug 62 gezeigt, das mindestens ein erfindungsgemäßes Leistungsverteilungssystem aufweist. Es sei an dieser Stelle darauf hingewiesen, dass das erfindungsgemäße Leistungsverteilungssystem auch besonders in Flugzeugen einsetzbar ist, die im Bereich des Rumpfhecks angeordnete Triebwerke aufweisen und lediglich eine kurze Distanz zu dem Rumpfinneren überbrückt werden muss.

Die ausgeführten Beispiele dienen lediglich der Verdeutlichung der erfindungsgemäßen Zusammenhänge und sind nicht als Beschränkung der Erfindung oder des Schutzumfangs zu verstehen. Vielmehr kann das erfindungsgemäße Prinzip auch auf Flugzeuge mit mehr als zwei Triebwerken angewandet werden, ohne auf die Vorteile verzichten zu müssen. Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichen

- 2: Leistungsverteilungssystem
- 4: Drehmomentübertragungsmittel
- 6: Drehmomentübertragungsmittel
- 8: Triebwerk
- 10: Triebwerk
- 12: Schnittstelle
- 14: Schnittstelle
- 16: erste Kupplung
- 18: erste Kupplung
- 20: Motor-Generator-Einheit
- 22: Motor-Generator-Einheit
- 24: linker Strang
- 26: Verbraucher
- 28: Verbraucher
- 30: Verteilungswelle
- 32: Getriebe
- 34: rechter Strang
- 36: Verbraucher
- 38: Verbraucher
- 40: Getriebe
- 42: Verteilungswelle
- 44: zweite Kupplung
- 46: Elektronikeinheit
- 48: Hilfsenergiequelle
- 50: Leistungsverteilungssystem
- 52: Übertragen von Drehmoment
- 54: Betreiben einer rotierbaren Einrichtung
- 56: Übertragen von Drehmoment zw. Motor-Generator-Einheit und Triebwerk
- 58: Trennen eines Strangs von einem Triebwerk
- 60: Schalten einer zweiten Kupplung
- 62: Flugzeug

## Patentansprüche

1. Flugzeug mit einem Leistungsverteilungssystem (2, 50) und mindestens zwei Triebwerken (8, 10), das Leistungsverteilungssystem (2, 50) aufweisend:
- ein linkes Drehmomentübertragungsmittel (4) für ein linkes Triebwerk (8) und ein rechtes Drehmomentübertragungsmittel (6) für ein rechtes Triebwerk (10),
- mindestens eine rotierbare Einrichtung eines Klimatisierungssystems, die sich im Innenbereich des Flugzeugrumpfes befindet,
- eine linke Verteilungswelle (30) und eine rechte Verteilungswelle (42),
- eine linke erste Kupplung (16) zum Übertragen eines Drehmomentes zwischen dem linken Drehmomentübertragungsmittel (4) und der linken Verteilungswelle (30) als linker Strang (24) und eine rechte erste Kupplung (18) zum Übertragen eines Drehmomentes zwischen dem rechten Drehmomentübertragungsmittel (6) und der rechten Verteilungswelle (42) als rechter Strang (34),
- mindestens eine elektrische Energiequelle (48) zum Betrieb der mindestens einen rotierbaren Einrichtung des Klimatisierungssystems und elektrischer Verbraucher des Flugzeugs bei im Stillstand befindlichen Triebwerken (8, 10) und
eine zweite Kupplung zum Übertragen von Drehmoment zwischen dem linken Strang (24) und dem rechten Strang (34),
- wobei die mindestens eine rotierbare Einrichtung des Klimatisierungssystems mit der linken oder rechten Verteilungswelle (30, 42) gekoppelt ist,
wobei die Drehmomentübertragungsmittel (4, 6) bewegbar gelagert und mit mindestens einer Welle des jeweiligen Triebwerks (8, 10) verbunden sind und wobei sich das jeweilige Drehmomentübertragungsmittel (4, 6) von der Welle des Triebwerks (8, 10) in den Innenbereich des Flugzeugrumpfs erstreckt und das an einem dem jeweiligen Triebwerk (8, 10) abgewandten Ende mindestens eine Schnittstelle (12, 14) zum Einleiten eines Drehmoments aufweist.

2. Flugzeug (2, 50) nach Anspruch 1, ferner aufweisend mindestens eine mit der Verteilungswelle (30, 42) gekoppelte Motor-Generator-Einheit (20, 22).

3. Flugzeug (2, 50) nach Anspruch 1 oder 2, bei dem mindestens ein Getriebe (32, 40) zwischen der Verteilungswelle (30, 42) und der rotierbaren Einrichtung des Klimatisierungssystems angeordnet ist.

4. Flugzeug (2, 50) nach einem der vorhergehenden Ansprüche, bei dem die mindestens eine Motor-Generator-Einheit (20, 22) zum Starten mindestens eines der Triebwerke (8, 10) eingerichtet ist.

5. Flugzeug (2, 50) nach einem der Ansprüche 2-4, bei dem die mindestens eine Motor-Generator-Einheit (20, 22) zum Bereitstellen von elektrischer Energie eingerichtet ist.

6. Verfahren zum Verteilen von Leistung in einem Flugzeug, umfassend den Schritt des Übertragens (52) eines Drehmoments von einem linken oder rechten Triebwerk (8, 10) des Flugzeugs über eine linke bzw. rechte Verteilungswelle (30, 42) zu einer rotierbaren Einrichtung eines Klimatisierungssystems, die sich in einem Innenbereich des Flugzeugrumpfs befindet, wobei entsprechend eine linke oder rechte erste Kupplung (16, 18) geschlossen wird,
bei dem mindestens eine elektrische Energiequelle (48) die rotierbare Einrichtung des Klimatisierungssystems und elektrische Verbraucher des Flugzeugs bei im Stillstand befindlichen Triebwerken (8, 10) versorgen wird und
bei dem eine zweite Kupplung (44) geschlossen wird, um von der linken oder rechten Verteilungswelle (30, 42) mechanische Leistung zu der jeweils anderen Verteilungswelle (30, 42) zu übertragen.

## Claims

1. An aircraft having a power distribution system (2, 50) and at least two engines (8, 10), the power distribution system (2, 50) comprising:
- a left-hand torque transmission means (4) for a left-hand engine (8) and a right-hand torque transmission means (6) for a right-hand engine (10),
- at least one rotatable device of an environmental control system, which device is located in an interior region of the aircraft fuselage,
- a left-hand distribution shaft (30) and a right-hand distribution shaft (42),
- a left-hand first coupling (16) for transferring a torque between the left-hand torque transmission means (4) and the left-hand distribution shaft (30) as a left-hand train (24) and a right-hand first coupling (18) for transferring a torque between the right-hand torque transmission means (6) and the right-hand distribution shaft (42) as a right-hand train (34),
- at least one electrical energy source (48) for operating the at least one rotatable device of the environmental control system and electrical loads of the aircraft when the engines (8, 10) are at a standstill, and
- a second coupling for transferring torque between the left-hand train (24) and the right-hand train (34),
wherein the at least one rotatable device of the environmental control system is coupled with the left-hand or right-hand distribution shaft (30, 42),
wherein the torque transmission means (4,6) is movably held and is connected to at least one shaft of the respective engine (8, 10),
wherein the respective torque transmission means (4, 6) extends from the shaft of the engine (8, 10) to the interior region of the aircraft fuselage, and wherein at an end pointing away from the engine (8, 10) the torque transmission means (4, 6) comprises at least one interface (12, 14) for introducing a torque.

2. Aircraft (2, 50) of claim 1, further comprising at least one motor-generator unit (20, 22) coupled to the distribution shaft (30, 42).

3. Aircraft (2, 50) of claim 1 or 2, wherein at least one gear arrangement (32, 40) is arranged between the distribution shaft (30, 42) and the rotatable device of the environmental control system.

4. Aircraft (2, 50) of any one of the preceding claims, wherein the at least one motor-generator unit (20, 22) is designed to start at least one of the engines (8, 10).

5. Aircraft (2, 50) of any one of claims 2-4, wherein the at least one motor-generator unit (20, 22) is designed to provide electrical energy.

6. A method for distributing power in an aircraft, comprising the step of transmitting (52) torque from a left-hand or right-hand engine (8, 10) of the aircraft through a left-hand or right-hand distribution shaft (30, 42) to a rotatable device of an environmental control system, which device is located in an interior region of the aircraft fuselage, wherein a left-hand or right-hand first coupling (16, 18) is closed accordingly,
wherein at least one electrical energy source (48) supplies the at least one rotatable device of the environmental control system and electrical loads of the aircraft when the engines (8, 10) are at a standstill, and
wherein a second coupling (44) is closed for transferring mechanical power from one of the left-hand or the right-hand distribution shaft (30, 42) to the other one of the left-hand or right-hand distribution shaft (30, 42).

## Revendications

1. Aéronef comportant un système de distribution de puissance (2, 50) et au moins deux mécanismes de propulsion (8, 10), le système de distribution de puissance (2, 50) présentant :
- un moyen de transmission de moment de force gauche (4) pour un mécanisme de propulsion gauche (8) et un moyen de transmission de moment de force droit (6) pour un mécanisme de propulsion droit (10),
- au moins un moyen rotatif d'un système de climatisation qui se trouve dans la zone intérieure du fuselage de l'aéronef,
- un arbre de distribution gauche (30) et un arbre de distribution droit (42),
- un premier accouplement gauche (16) pour transmettre un moment de force entre le moyen de transmission de moment de force gauche (4) et l'arbre de distribution gauche (30) en tant que conduit gauche (24) et un premier accouplement droit (18) pour transmettre un moment de force entre le moyen de transmission de moment de force droit (6) et de l'arbre de distribution droit (42) en tant que conduit droit (34),
- au moins une source d'énergie électrique (48) pour faire fonctionner l'au moins un moyen rotatif du système de climatisation et des consommateurs électriques de l'aéronef en cas de mécanismes de propulsion (8, 10) se trouvant à l'arrêt et un second accouplement pour transmettre un moment de force entre le conduit gauche (24) et le conduit droit (34),
l'au moins un moyen rotatif du système de climatisation étant couplé avec l'arbre de distribution gauche ou droit (30, 42),
le moyen de transmission de moment de force (4, 6) étant monté mobile et relié avec au moins un arbre du mécanisme de propulsion (8, 10) respectif et le moyen de transmission de moment de force (4, 6) respectif s'étendant de l'arbre du mécanisme de propulsion (8, 10) vers la zone intérieure du fuselage de l'aéronef et l'extrémité opposée à l'un des mécanismes de propulsion (8, 10) respectifs présente au moins une interface (12, 14) destinée à induire un moment de force.

2. Aéronef (2, 50) selon la revendication 1, présentant au moins une unité moteur-générateur (20, 22) couplée avec l'arbre de distribution (30, 42).

3. Aéronef (2, 50) selon la revendication 1 ou 2, dans lequel au moins une transmission (32, 40) est disposée entre l'arbre de distribution (30, 42) et le moyen rotatif du système de climatisation.

4. Aéronef (2, 50) selon l'une des revendications précédentes, dans lequel l'au moins une unité moteur-générateur (20, 22) est agencée pour démarrer au moins un des mécanismes de propulsion (8, 10).

5. Aéronef (2, 50) selon l'une des revendications 2 à 4, dans lequel l'au moins une unité moteur-générateur (20, 22) est agencée pour fournir de l'énergie électrique.

6. Procédé de distribution de puissance dans un aéronef, comprenant l'étape de transmission (52) d'un moment de force d'un mécanisme de propulsion gauche ou droit (8, 10) de l'aéronef via un arbre de distribution gauche ou droit (30, 42) jusqu'à un moyen rotatif d'un système de climatisation, qui se trouve dans une zone intérieure du fuselage de l'aéronef, un premier accouplement droit ou gauche (16, 18) étant fermé de manière correspondante,
dans lequel au moins une source d'énergie électrique (48) alimentera le moyen rotatif du système de climatisation et des consommateurs électriques de l'aéronef en cas de mécanismes de propulsion (8, 10) se trouvant à l'arrêt et
dans lequel un second accouplement (44) sera fermé pour transmettre de la puissance mécanique de l'arbre de distribution gauche ou droite (30, 42) à l'autre arbre de distribution (30, 42) respectif.
